# EUROPEAN PATENT APPLICATION

(11) **EP 3 660 780 A1**
(43) Date of publication of application: **03.06.2020**
(21) Application number: 18837374.0
(22) Date of filing: 23.06.2018
(51) Int. Cl.: G06T 3/00

(54) **METHOD AND APPARATUS FOR ACQUIRING IMAGES, ACQUISITION DEVICE, AND COMPUTER STORAGE MEDIUM**

(30) Priority: 25.07.2017 CN 201710612893
(71) Applicant: ZTE Corporation, Shenzhen, Guangdong 518057 (CN)
(72) Inventor: YANG, Tingdong, Shenzhen Guangdong 518057 (CN)
(74) Representative: Baudler, Ron
(86) International application number: PCT/CN2018/092526
(87) International publication number: WO 2019/019846

(57) **Abstract**

The embodiments of present disclosure involve an image capturing method and device. The image capturing method includes: performing image capturing to generate first images corresponding to preset regions when a capturing apparatus is moved to preset capturing angles; splicing the first images corresponding to the preset regions to generate a spherical image; and projecting the spherical image onto a preset reference plane to generate a second image.

## Description

### TECHNICAL FIELD

The present disclosure relates to the field of information technologies, and in particular, to an image capturing method and device, a capturing apparatus, and a computer storage medium.

### BACKGROUND

Image capturing is an essential function of many electronic devices. For example, mobile phones, tablet computers, wearable devices, and the like are equipped with cameras which may be used for capturing images. In some cases, a wide-angle image needs to be captured, and capturing of the wide-angle image needs to be provided with a special wide-angle lens. It is obvious that configuring the wide-angle lenses in the electronic devices increases cost of the electronic devices and prevents the electronic devices from being light and thin.

### SUMMARY

Embodiments of the present disclosure provide an image capturing method and device to solve the above problems.

To achieve the above objective, technical solutions of the present disclosure are implemented as follows.

A first aspect of the embodiments of the present disclosure provides an image capturing method, including: performing image capturing to generate first images corresponding to preset regions when a capturing apparatus is moved to preset capturing angles; splicing the first images corresponding to the preset regions to generate a spherical image; and projecting the spherical image onto a preset reference plane to generate a second image.

Based on the above technical solution, the step of performing image capturing to generate the first images corresponding to the present regions when the capturing apparatus is moved to the preset capturing angles includes: detecting a movement parameter of the capturing apparatus; and performing image capturing to generate the first images when the movement parameter indicates that the capturing apparatus is moved to places where cause a current capturing angle of the capturing apparatus reach the preset capturing angles.

Based on the above technical solution, the image capturing method further includes: displaying a setting page; detecting a first operation for the setting page; and determining a capturing range corresponding to the spherical image according to the first operation.

Based on the above technical solution, the image capturing method further includes: detecting a second operation for the setting page; and determining distribution of the preset regions according to the second operation.

Based on the above technical solution, actual regions captured in the first images are larger than the preset regions.

Based on the above technical solution, the image capturing method further includes: acquiring a movement parameter of the capturing apparatus when capturing each of the first images; displaying the first images at preset positions according to the movement parameters, where the preset positions and the preset regions correspond one by one; and controlling the capturing apparatus to stop capturing the first images when all the preset positions are displayed with the first images.

Based on the above technical solution, the image capturing method further includes: outputting re-capturing prompt information when a difference between a capturing angle of an image generated by the capturing apparatus according to the movement parameter and the preset capturing angle is determined not to be within a preset range.

A second aspect of the embodiments of the present disclosure provides an image capturing device, including: a capturing unit configured to perform image capturing to generate first images corresponding to preset regions when a capturing apparatus is moved to preset capturing angles; a splicing unit configured to splice the first images corresponding to the preset regions to generate a spherical image; and a projecting unit configured to project the spherical image onto a preset reference plane to generate a second image.

Based on the above technical solution, the capturing unit is further configured to detect a movement parameter of the capturing apparatus, and capture the first images when the movement parameter indicates that the capturing apparatus is moved to places where cause a current capturing angle of the capturing apparatus reach the preset capturing angles.

Based on the above technical solution, the image capturing device further includes: a display unit configured to display a setting page; a detecting unit configured to detect a first operation for the setting page; and a determining unit configured to determine a capturing range corresponding to the spherical image according to the first operation.

Based on the above technical solution, the detecting unit is further configured to detect a second operation for the setting page; and the determining unit is further configured to determine distribution of the preset regions according to the second operation.

Based on the above technical solution, actual regions captured in the first images are larger than the preset regions.

Based on the above technical solution, the image capturing device further includes: an acquiring unit configured to acquire a movement parameter of the capturing apparatus when capturing each of the first images; a display unit configured to display the first images at preset positions according to the movement parameters, where the preset positions and the preset regions correspond one by one; and the capturing unit is further configured to control the capturing apparatus to stop capturing the first images when all the preset positions are displayed with the first images.

Based on the above technical solution, the image capturing device further includes a prompting unit configured to output re-capturing prompt information when a difference between a capturing angle of an image generated by the capturing apparatus according to the movement parameter and the preset capturing angle is determined not to be within a preset range.

A third aspect of the embodiments of the present disclosure provides a capturing apparatus, including: a camera configured to capture images; a memory configured to store a computer program; and a processor respectively connected with the camera and the memory and configured to execute the computer program to control the camera to capture images so as to implement the image capturing method provided by the above items or any one of the above items.

A fourth aspect of the embodiments of the present disclosure provides a computer storage medium storing a computer program which, when executed by a processor, cause the processor to perform the image capturing method provided by the above items or one of the above items.

The image capturing method and device, the capturing apparatus, and the computer storage medium provided by the embodiments of the present disclosure may capture and form first images at a plurality of preset capturing angles, splice the first images into a spherical image, and acquire a second image through projection of the spherical image. The second image herein may be a wide-angle image or a full-angle image. Obviously, such electronic devices can collect wide-angle images or full-angle images without using a special wide-angle lens and other cameras with larger capturing angles. This reduces hardware cost of the electronic devices and helps to reduce weight of the electronic devices.

### BRIEF DESCRIPTION OF THE DRAWINGS

FIG. 1 is a schematic flowchart of an image capturing method provided by an embodiment of the present disclosure;
FIG. 2A is a schematic diagram of a capturing sphere provided by an embodiment of the present disclosure;
FIG. 2B is a schematic diagram of another capturing sphere provided by an embodiment of the present disclosure;
FIG. 3A is a schematic view of a projection manner of a spherical image provided by an embodiment of the disclosure;
FIG. 3B is a projected image formed by the projection manner shown in FIG. 3A;
FIG. 4A is a schematic view of a projection manner of a spherical image provided by an embodiment of the disclosure;
FIG. 4B is a projected image formed by the projection manner shown in FIG. 4A;
FIG. 5A is a schematic view of a projection manner of a spherical image provided by an embodiment of the disclosure;
FIG. 5B is a projected image formed by the projection manner shown in FIG. 5A;
FIG. 6 is a schematic diagram of a movement track of a capturing device provided by an embodiment of the present disclosure; and
FIG. 7 is a schematic structural diagram of an image capturing device provided by an embodiment of the present disclosure.

### DETAILED DESCRIPTION

Technical solution of the present disclosure is further described in detail with reference to accompanying drawings and specific embodiments.

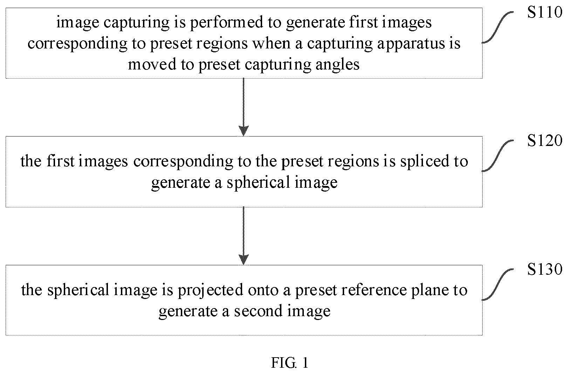

As shown in FIG. 1, an embodiment provides an image capturing method including the following steps S110 to S130.

In Step S 110, image capturing is performed to form first images corresponding to preset regions when a capturing apparatus is moved to preset capturing angles.

In Step S120, the first images of the preset regions are spliced to generate a spherical image.

In Step S130, the spherical image is projected onto a preset reference plane to generate a second image.

The image capturing method provided by the embodiment may be applied to various electronic devices with an image capturing function, such as a mobile phone, a tablet computer, or a wearable device.

In the embodiment, the capturing apparatus is moved while performing the image capturing, for example, a user holds the capturing apparatus and moves it.

In a process of moving the capturing apparatus, a capturing angle of a capturing unit of the capturing apparatus may be kept unchanged relative to the capturing apparatus, but a capturing angle of the capturing apparatus relative to a reference point is changed due to the movement of the capturing apparatus. In the embodiment, the preset capturing angles and current capturing angles of the capturing apparatus are both relative to the reference point. The reference point in the embodiment may be preset. For example, when the user holds the capturing apparatus to move, a position where the user stands or a joint position between an upper arm and a lower arm of the user may be regarded as the reference point.

When the capturing apparatus is moved to one preset capturing angle in step S110, a plurality of candidate images are continuously captured in a preset time interval at the preset capturing angle, and one candidate image having optimal image quality is selected as the first image through comparison of image quality, so as to perform the splicing for the spherical image in step S120. Therefore, on one hand, image quality of the spherical image and image quality of the second image can be improved, and on the other hand, a problem of repeated capturing caused by poor image quality of only one image captured each time can be solved. The comparison of image quality herein may include comparison of image sharpness, in this case, one candidate image having a highest sharpness is selected as the first image. Since the capturing apparatus captures images when it is moving, the captured regions of two adjacent candidate images may slightly differ from each other, and actual captured regions corresponding to the candidate images, which may be selected in the embodiment, at least include whole of the preset regions.

In the embodiment, a result of splicing all the captured regions is spherical relative to the reference point. Therefore, a spliced image formed by splicing a plurality of the first images from different preset regions in step S120 is a spherical or hemispherical image relative to the reference point, and thus is referred to as a spherical image. When performing the image splicing, one first image is an image having a capturing object as one preset region. It should be noted that the spherical image herein includes a global image such as a 360-degree spherical image, a 90-degree spherical image or a hemispherical image such as a 180-degree spherical image.

In step S130, the spherical image is projected onto the preset reference plane, the preset reference plane may be a flat plane or a curved plane. The spherical image is projected onto the preset reference plane, and an image of the spherical image transmitted into the preset reference plane is the second image. The second image is projected with reference to the user's view. In the embodiment, the preset reference plane may be a user sight plane. If the preset reference plane is a flat plane, the second image is a projection effect of the spherical image projected onto the flat plane; if the preset reference plane is a curved plane, the second image is a projection effect of the spherical image projected onto the curved plane.

The image capturing method provided by the embodiment may capture a wide-angle image or a full-angle image by capturing a plurality of first images through a standard lens and then splicing the first images. The wide-angle image is an image having the reference point as a circle center and having a capturing range more than 90 degrees or 135 degrees. The full-angle image may be a 360-degree spherical image centered on the reference point.

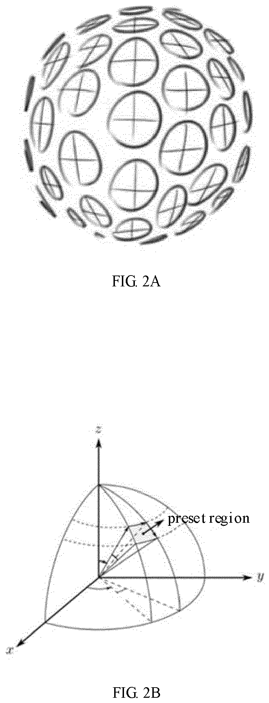

FIG. 2A is a schematic diagram of a capturing sphere, and one circle in FIG. 2A represents one preset region. Images captured from these preset regions are spliced to form a spherical image or an approximately spherical image having a radius equal to that of the sphere shown in FIG. 2A.

FIG. 2B is a schematic diagram of another capturing sphere. In FIG. 2B, an origin of a rectangular coordinate system formed by an x axis, a y axis and a z axis is used as a spherical center of the capturing sphere, and a capturing angle is 90 degrees. In FIG. 2B, preset regions are divided by latitude lines and longitude lines of the sphere. In the embodiment, the preset regions may be formed by cross-cutting of the longitude lines and the latitude lines of the sphere.

A second image is captured by projecting the spherical image onto a preset reference plane. The first images and the second image are both planar images.

Several options for projecting the spherical image into the second image are provided below.

### Option 1: cylindrical projection

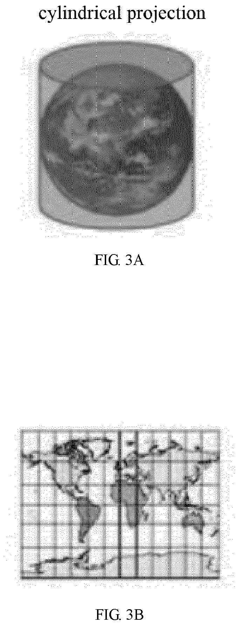

As shown in FIG. 3A, the cylindrical projection is performed by taking a spherical image of the earth as an example, and a cylindrical projection plane image as shown in FIG. 3B is formed. A process of the cylindrical projection includes the following steps: putting a cylinder tangent to the spherical image at a periphery of the spherical image; projecting the spherical image onto a plane of the cylinder by taking the plane of the cylinder as a projection plane; expanding the plane of the cylinder to form an image, i.e. the cylindrical projection plane image.

### Option 2: conical projection

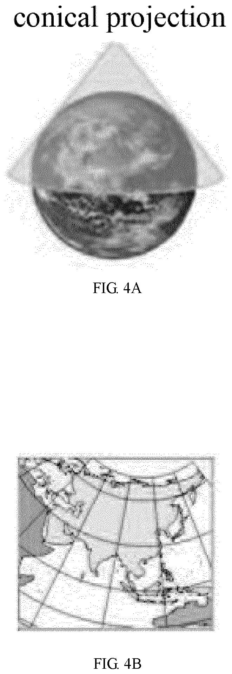

As shown in FIG. 4A, the conical projection is performed by taking the spherical image of the earth as an example, and a conical projection plane image as shown in FIG. 4B is formed. A process of the conical projection includes the following steps: putting a projecting cone at a periphery of the spherical image; projecting the spherical image onto a plane of the cone; and then cutting the plane of the cone along a straight line in a preset direction to capture the cone projection plane image.

### Option 3: azimuthal projection

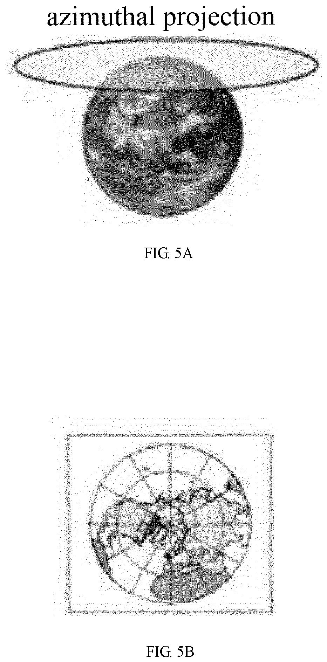

As shown in FIG. 5A, the azimuthal projection is performed by taking the spherical image of the earth as an example, and a circular planar image as shown in FIG. 5B is formed. The azimuthal projection includes a non-perspective azimuthal projection and a perspective azimuthal projection. The non-perspective azimuthal projection is divided into an equiangular projection, an equal area projection and an arbitrary (including equidistant) projection according to deformation property, and the perspective azimuthal projection is divided into an orthographic projection, an outer center projection, a spherical projection and a spherical center projection according to different viewpoint positions.

In some embodiments, the step S110 may include: detecting a movement parameter of the capturing apparatus; and performing image capturing to generate the first images when the movement parameter indicates that the capturing apparatus is moved to places where cause a current capturing angle of the capturing apparatus reach the preset capturing angles.

In the embodiment, various motion sensors may be utilized to acquire the movement parameter. For example, an acceleration sensor and/or an angular velocity sensor may be used for detecting the movement parameter of the capturing apparatus to acquire acceleration and/or angular velocity of the movement. The acceleration and/or the angular velocity may be used for the processor to determine whether a capturing angle of a current capturing orientation of the capturing apparatus relative to the reference point is one of the preset capturing angles.

In some embodiments, the method further includes: displaying a setting page; detecting a first operation for the setting page; and determining a capturing range corresponding to the spherical image according to the first operation.

The setting page may be displayed before performing the step S110. For example, the capturing apparatus may display the setting page when wide-angle capturing or panoramic capturing is started according to an operation input by a user. The capturing range is determined according to an operation gesture and/or an operation voice of the user. The capturing range herein may include the capturing angle. For example, if the capturing range of distribution of the spherical image is determined to be a hemisphere, the spherical image is formed by the captured images in the hemisphere. For example, if the capturing range is 90 degrees, the preset regions are distributed within 90 degrees with a center of the spherical image as a center, which is corresponding to being distributed within 1/4 spheres.

In some embodiments, the method further includes: detecting a second operation for the setting page; and determining distribution of the preset regions according to the second operation.

In the embodiment, the number of the preset regions may be set according to the second operation. For example, area and a distribution position of each preset region are determined according to the setting of the number of the preset regions after the capturing range is determined.

Since image splicing is involved, actual regions captured in the first images are larger than the preset regions in the embodiment. For example, the area of one preset region is A, the area of the actual region captured in one first image is B, B is larger than A so that it is easy to cut where edges are unclear in the splicing process, and seamless splicing of a plurality of first images may be realized, thereby forming a seamless spherical image.

In some embodiments, the method further includes: acquiring a movement parameter of the capturing apparatus when capturing each of the first images; displaying the first images at preset positions according to the movement parameters, where the preset positions and the preset regions correspond one by one; and controlling the capturing apparatus to stop capturing the first images when all the preset positions are displayed with the first images.

In the embodiment, in order to realize visual capturing to inform the user current capturing condition, the preset positions are displayed on a display screen according to the number of the preset regions. During initialization, the preset positions are blank positions, and after the first images corresponding to the preset positions are successfully captured, the first images are displayed at the preset positions, so that the user knows how many available first images are currently captured and how many first images need to be captured, and the user can conveniently pay attention to and control the whole capturing process.

In the embodiment, when all the preset positions are displayed with the first images, it is considered that all the images for generating the spherical image have been captured, and the capturing may be stopped. Of course, in order to improve friendliness of user interaction, a stop prompt is output, so that the user may stop moving the capturing apparatus.

In some embodiments, the method further includes: outputting re-capturing prompt information when a difference between a capturing angle of an image generated by the capturing apparatus according to the movement parameter and the preset capturing angle is determined not to be within a preset range.

In some cases, the capturing apparatus captures the preset regions, but the capturing angle is not correct, which may result in poor image quality for forming the second image. In the embodiment, the user is prompted to re-capture through outputting of the re-capturing prompt information. For example, a prompt icon is displayed at a preset position where one first image is displayed, an operation for the prompt icon is acquired, the currently captured first image is deleted, the capturing apparatus moves again, and when the capturing apparatus moves to one preset capturing angle, the first image in the preset region is captured again, so that a capturing effect of the second image is improved, and a problem of poor image quality such as image distortion is solved.

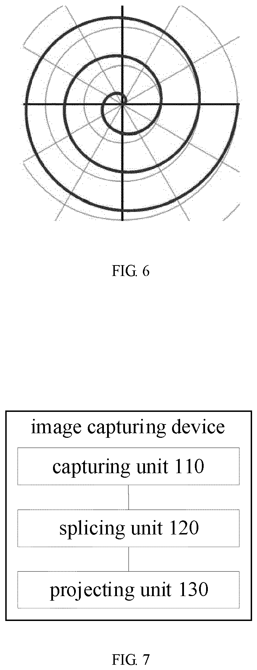

In the embodiment, the capturing apparatus may move according to a certain movement track, and FIG. 6 shows a movement track of the capturing apparatus. The capturing apparatus moves spirally from outside to inside or from inside to outside. The moving radius is larger and larger when the capturing apparatus moves spirally from inside to outside, and the moving radius is smaller and smaller when the capturing apparatus moves spirally from outside to inside. Certainly, in specific implementation, the movement of the capturing apparatus is not limited to the spiral track, and may be a fold line moving track, and only needs to move to each preset capturing angle. By adopting the movement track, the capturing apparatus can conveniently acquire the captured images through each preset capturing angle in sequence without omission.

In some embodiments, after an electronic device enters an image capturing mode provided in the embodiment and before the capturing for the first images is performed, the movement track of the capturing apparatus is displayed, so that the user can move the capturing apparatus according to the movement track.

As shown in FIG. 7, an image capturing device of the embodiment may be applied to various electronic devices. The image capturing includes the following units.

A capturing unit 110 is configured to perform image capturing to generate first images corresponding to preset regions when a capturing apparatus is moved to preset capturing angles.

A splicing unit 120 is configured to splice the first images corresponding to the preset regions to generate a spherical image.

A projecting unit 130 is configured to project the spherical image onto a preset reference plane to generate a second image.

The electronic device may be various electronic devices having a camera, such as a mobile phone, a tablet computer, a wearable device or a notebook computer.

The first images may be standard plane images captured by a standard lens, and the second image may be a wide-angle image or a full-angle image.

The capturing unit 110, the splicing unit 120, and the projecting unit 130 may all correspond to a processor or a processing circuitry. The processor may include a central processing unit (CPU), a microprocessor (MCU), a digital signal processor (DSP), or a programmable array (PLC). The processing circuit may be an application specific integrated circuit (ASIC). The processor or the processing circuitry may implement functions of the units through execution of preset codes.

The capturing unit 110, the splicing unit 120, and the projecting unit 130 may correspond to one processor or one processing circuit together, or may correspond to different processors or different processing circuits respectively.

In the embodiment, the capturing unit 110, the splicing unit 120, and the projecting unit 130 may correspond to a CPU or an AP in a mobile phone or a tablet, and may control image capturing of a camera.

In some embodiments, the capturing unit 110 is configured to detect a movement parameter of the capturing apparatus, and capture the first images when the movement parameter indicates that the capturing apparatus is moved to places where cause a current capturing angle of the capturing apparatus reach the preset capturing angles.

The capturing unit 110 in the embodiment may correspond to various sensors for detecting movement state of the capturing apparatus, such as an acceleration sensor or a velocity sensor or an angular velocity sensor or a gyroscope, and the like. By detecting the movement parameter of the capturing apparatus, such as acceleration or speed or displacement, it may be determined whether an angle of a current capturing orientation of the capturing unit relative to a reference point is one of the preset capturing angles, if yes, a first images is captured, so that a plurality of first images may be spliced into the spherical image conveniently, and then the planar second image is formed through projecting.

In some embodiments, the device further includes the following units.

A display unit is configured to display a setting page.

A detecting unit is configured to detect a first operation for the setting page.

A determining unit is configured to determine a capturing range corresponding to the spherical image according to the first operation.

In the embodiment, the display unit may correspond to various display screens, for example, a liquid crystal display screen, a projection display screen, an electronic ink display screen, or an organic light emitting diode (OLED) display screen and the like.

The detecting unit may correspond to a human-computer interaction interface, such as various physical or virtual controls, for example, a touch panel of a mobile phone.

The determining unit may correspond to a processor or a processing circuit. The determining unit determines the capturing range according to the first operation. In the embodiment, the capturing orientation is a boundary range of a capturing angle of the capturing apparatus relative to the reference point, if the boundary range is 180 degrees, at this time, the first images are spliced to form a hemispherical image; if the boundary range is 90 degrees, the first images are spliced to form a quadrant of a rectangular coordinate system.

FIG. 2B shows a sphere corresponding to a spherical image having a capturing range of 90 degrees, and shows one preset region.

In some embodiments, the detecting unit is further configured to detect a second operation for the setting page; the determining unit is further configured to determine distribution of the preset regions according to the second operation.

The detecting unit may be a human-computer interaction interface for various detection operations and is multiplexed to detect the second operation. The determining unit may correspond to a processor or a processing circuit and is further configured to determine the number and the distribution of the preset regions.

In the embodiment, in order to improve the splicing effect of the spherical image, actual regions captured in the first images are larger than the preset regions. Therefore, the two first images adjacently distributed on the sphere may be partially overlapped, so that splicing gaps are reduced, and a phenomenon that the first images do not completely cover the preset regions due to capturing deviation can be reduced.

In still other embodiments, the device further includes the following units.

An acquiring unit is configured to acquire a movement parameter of the capturing apparatus when capturing each of the first images.

A display unit is configured to display the first images at preset positions according to the movement parameters, where the preset positions and the preset regions correspond one by one.

The acquiring unit 110 is configured to control the capturing apparatus to stop capturing the first images when all the preset positions are displayed with the first images.

In the embodiment, the acquiring unit may include various sensors, and the sensors may directly acquire the movement parameters.

The display unit may correspond to the aforementioned various display screens.

In the embodiment, the capturing unit 110 is further configured to stop capturing the first images after the capturing apparatus captures all the first images.

In some embodiments, the device further includes the following unit.

A prompting unit is configured to output re-capturing prompt information when a difference between a capturing angle of an image generated by the capturing apparatus according to the movement parameter and the preset capturing angle is determined not to be within a preset range.

The prompting unit herein may correspond to an output structure of various prompts of the electronic apparatus. The prompting unit may be a display screen, and the prompt information is output through display. The prompting unit may be a speaker or the like, and the prompt information is outputted through audio output.

The embodiment of the present disclosure further provides a capturing apparatus. The capturing apparatus includes the following parts.

A camera is configured to capture images.

A memory is configured to store a computer program.

A processor is respectively connected with the camera and the memory and configured to execute the computer program to control the camera to capture images so as to implement any one or more of the image capturing methods described above.

In the embodiment, the camera may be various devices or structures capable of capturing images, such as a standard lens or a wide-angle lens, which are disposed in the capturing apparatus.

The memory may include a variety of storage media, such as non-transitory storage media that may be used to store computer programs.

The processor may include a central processing unit, a microprocessor, a digital signal processor, a programmable array, or the like, and connect to the camera and the memory via a bus, where the bus may include an integrated circuit (IIC) bus or a peripheral interconnect standard (PCI) bus, or the like.

The processor may implement the image capturing method provided by any one of the technical solutions in the foregoing embodiments by executing the computer program.

The embodiment of the present disclosure further provides a computer storage medium on which a computer program is stored, and when the computer program is executed by a processor, the processor implements one or more of the image capturing methods described above.

The computer storage medium herein is preferably a non-transitory storage medium.

One specific example is provided below in connection with any of the embodiments described above.

The first example is as follows.

The example provides a method of capturing a wide-angle image through a standard lens, the method includes: in a wide-angle capturing mode of a mobile phone, the mobile phone is moved regularly, for example, a user holds the mobile phone to move according to the movement track shown in FIG. 6; in the moving process, a camera assembly of the mobile phone acquires data according to different regions of a target scene and stores the data into different images; a sensor component of the mobile phone transmits position information of the mobile phone when the image data is acquired to an image processor; the image processor preprocesses the images of the different regions according to the position information of the mobile phone; and the image processor splices and projects the processed image information to finally form a wide-angle image.

The example implements a wide-angle capturing function by combining gestures and image processing to replace a function of an external lens, and implements a advanced function at low cost.

The second example is as follows.

In the wide-angle capturing mode, the mobile phone provides a friendly user interface to help and guide the user to complete the capturing of the wide-angle image.

Before capturing, a viewfinder range needs to be determined first. The range may be set by using a preset parameter, or may be set by a user according to actual situation. For example, the range of the target scene is a hemispherical region centered on a capturing position, as shown in the schematic distribution of the capturing region of the spherical projection shown in FIG. 2A.

Then, capturing fineness is determined. The capturing fineness may be conveniently set and adjusted in the friendly user interface. A size of an image preset region is determined by the fineness, and a higher fineness indicates that the smaller the preset region is and the more angle points need to be captured, as shown in the schematic diagram of the preset regions shown in FIG. 2B.

During actual capturing, the user can adopt different movement gestures to complete image capturing according to personal preferences. One of the most common types of gestures is shown in FIG. 6. The user enables the captured regions of the camera assembly to completely cover the hemisphere of the whole viewfinder range by rotating the mobile phone. In the process of rotating, the processor stores images captured at different view angles and sequentially displays the images on the interface, where unfinished parts are displayed in blank. Therefore, the capturing process is the same as a rubbing mode, and the scene is gradually drawn in the mobile phone.

In the moving process, the image processor determines whether different view angles accord with the setting through real-time data provided by acceleration sensor and angular velocity sensor, and stores the current image if the view angle accord with the setting. When the position of the mobile phone exceeds an allowable difference range, the system may output a corresponding prompt to ensure that the gesture of the user may return to a correct position, so that the captured image can meet a requirement of focal perspective as much as possible.

The larger the allowable difference range is, the more serious the distortion condition of the image synthesized in the later stage is, and the stronger the distortion sense of the image is; the smaller the allowable difference range is, the more difficult the capturing is, but the truer the image is. The allowable difference range is set according to a rule of observing environment by human eyes, and the closer the movement track of the mobile phone is to the movement rule of rotating the human eyes and the human head, the smaller the error is, and the truer the captured image is.

As shown in FIG. 2A, when image capturing is completed at all the captured angles, the image processor splices all the images and forms a spherical image based on a sphere. The actual region of each capturing angle herein is required to be slightly larger than an effective preset region.

Finally, the image processor projects the spherical image onto a reference plane, and a final wide-angle image is formed after a boundary of the image is determined. The wide-angle image herein may be an image with an aspect ratio of 4: 3.

In the several embodiments provided in the present application, it should be understood that the disclosed apparatus and method may be implemented in other manners. The above-described apparatus embodiments are merely illustrative, for example, the division of the units is only one kind of logical function division, and there may be other division ways in actual implementation, such as, multiple units or components may be combined, or may be integrated into another system, or some features may be omitted, or not implemented. In addition, the coupling, direct coupling or communication connection between the components shown or discussed may be indirect coupling or communication connection through some interfaces, apparatus or units, and may be electrical, mechanical or in other forms.

The units described as separate parts may or may not be physically separate, and the parts described as units may or may not be physical units, may be located in one place, or may be distributed on multiple network units; some or all of the units can be selected according to actual needs to achieve the purpose of the solution of the embodiment.

In addition, all functional units in the embodiments of the present disclosure may be integrated into one processing module, or each unit may be separately used as one unit, or two or more units may be integrated into one unit; the integrated unit may be implemented in a form of hardware, or in a form of hardware with a software functional unit.

Those of ordinary skill in the art will understand that: all or part of the steps of implementing the method embodiments may be implemented by hardware related to program instructions, and the aforementioned program may be stored in a computer-readable storage medium, and performs the steps including the method embodiments when it is executed; and the aforementioned storage medium includes: a mobile storage device, a read-only memory (ROM), a random access memory (RAM), a magnetic disk or an optical disk, and various media capable of storing program codes.

The above description is only the specific embodiments of the present disclosure, but the scope of the present disclosure is not limited thereto, and any person skilled in the art can easily think of that changes or alternatives within the technical scope of the present disclosure shall cover the scope of the present disclosure. Therefore, the protection scope of the present disclosure should be subject to the protection scope of the claims.

### Industrial applicability

The technical scheme provided by the embodiments of the disclosure can be applied to the field of information technology. By adopting the technical scheme provided by the present invention, the electronic apparatus can acquire wide-angle images or full-angle images without a special wide-angle lens and other cameras with a larger capturing angle, so that hardware cost of the electronic apparatus is reduced, and the electronic apparatus is favorable for realizing lightness and thinness.

## Claims

1. An image capturing method, comprises:
performing image capturing to generate first images corresponding to preset regions when a capturing apparatus is moved to preset capturing angles;
splicing the first images corresponding to the preset regions to generate a spherical image; and
projecting the spherical image onto a preset reference plane to generate a second image.

2. The image capturing method of claim 1, wherein the step of performing image capturing to generate the first images corresponding to the present regions when the capturing apparatus is moved to the preset capturing angles comprises:
detecting a movement parameter of the capturing apparatus; and
performing image capturing to generate the first images when the movement parameter indicates that the capturing apparatus is moved to places where cause a current capturing angle of the capturing apparatus reach the preset capturing angles.

3. The image capturing method of claim 1, further comprising:
displaying a setting page;
detecting a first operation for the setting page; and
determining a capturing range corresponding to the spherical image according to the first operation.

4. The image capturing method of claim 3, further comprising:
detecting a second operation for the setting page; and
determining distribution of the preset regions according to the second operation.

5. The image capturing method of claim 4, wherein
actual regions captured in the first images are larger than the preset regions.

6. The image capturing method of any one of claims 1 to 5, further comprising:
acquiring a movement parameter of the capturing apparatus when capturing each of the first images;
displaying the first images at preset positions according to the movement parameters, wherein the preset positions and the preset regions correspond one by one; and
controlling the capturing apparatus to stop capturing the first images when all the preset positions are displayed with the first images.

7. The image capturing method of claim 6, further comprising:
outputting re-capturing prompt information when a difference between a capturing angle of an image generated by the capturing apparatus according to the movement parameter and the preset capturing angle is determined not to be within a preset range.

8. An image capturing device, comprises:
a capturing unit configured to perform image capturing to generate first images corresponding to preset regions when a capturing apparatus is moved to preset capturing angles;
a splicing unit configured to splice the first images corresponding to the preset regions to generate a spherical image; and
a projecting unit configured to project the spherical image onto a preset reference plane to generate a second image.

9. The image capturing device of claim 8, wherein
the capturing unit is further configured to detect a movement parameter of the capturing apparatus, and capture the first images when the movement parameter indicates that the capturing apparatus is moved to places where cause a current capturing angle of the capturing apparatus reach the preset capturing angles.

10. The image capturing device of claim 8, further comprising:
a display unit configured to display a setting page;
a detecting unit configured to detect a first operation for the setting page; and
a determining unit configured to determine a capturing range corresponding to the spherical image according to the first operation.

11. The image capturing device of claim 10, wherein
the detecting unit is further configured to detect a second operation for the setting page; and
the determining unit is further configured to determine distribution of the preset regions according to the second operation.

12. The image capturing device of claim 11, wherein
actual regions captured in the first images are larger than the preset regions.

13. The image capturing device of any one of claims 8 to 12, further comprising:
an acquiring unit configured to acquire a movement parameter of the capturing apparatus when capturing each of the first images;
a display unit configured to display the first images at preset positions according to the movement parameters, wherein the preset positions and the preset regions correspond one by one; and
the capturing unit is further configured to control the capturing apparatus to stop capturing the first images when all the preset positions are displayed with the first images.

14. The image capturing device of claim 13, further comprising:
a prompting unit configured to output re-capturing prompt information when a difference between a capturing angle of an image generated by the capturing apparatus according to the movement parameter and the preset capturing angle is determined not to be within a preset range.

15. A capturing apparatus, comprising:
a camera configured to capture images;
a memory configured to store a computer program; and
a processor respectively connected with the camera and the memory and configured to execute the computer program to control the camera to capture images so as to implement the image capturing method of any one of claims 1 to 7.

16. A computer storage medium storing a computer program which, when executed by a processor, cause the processor to perform the image capturing method of any one of claims 1 to 7.
